# EUROPEAN PATENT APPLICATION

(11) **EP 2 755 178 A1**
(43) Date of publication of application: **16.07.2014**
(21) Application number: 14150940.6
(22) Date of filing: 13.01.2014
(51) Int. Cl.: G06Q 20/20, G06Q 20/32, G06Q 20/06, G06Q 20/34, G06Q 20/36, G07F 7/10

(54) **Portable electronic device having a memory card module for conducting electronic transactions**

(30) Priority: 15.01.2013 TW 102101479
(71) Applicant: Chou, Hung-Chien, Taichung City 408 (TW)
(72) Inventor: Chou, Hung-Chien, Taichung City 408 (TW)
(74) Representative: Oxley, Rachel Louise

(57) **Abstract**

A portable electronic device (2) is provided for conducting an electronic transaction with a point-of-sale (POS) terminal (80), and includes a device processor (20), and a memory card module (23). The memory card module (23) includes a transceiver unit (231) to receive transaction data from the POS terminal (80), a storage unit (232) including a working zone (2321) and a hidden zone (2322) that stores the transaction data, and a processing unit (2303). The transaction data (402) stored in the hidden zone (2322) is accessible only to the processing unit (2303). The processing unit (2303) is responsive to control by the device processor (20) that executes a read-only control application (401) stored in the working zone (2321) for accessing the transaction data (402) stored in the hidden zone (2322).

## Description

This application claims priority to Taiwanese Application No. 102101479, filed on January 15, 2013.

The invention relates to an electronic device, and more particularly to a portable electronic device having a memory card module for conducting electronic transactions.

In recent years, e-wallet service has grown rapidly. Consumers may use mobile phones with contact-free payment function to conduct contact-free payment in a store (e.g., a convenient store) equipped with a POS (point-of-sale) terminal and an e-wallet reader.

Taiwan patent publication no. 201248409 discloses a mobile device including a non-volatile memory and a safety element that operate independently from each other, which is unable to prevent file destruction by hackers breaking into the systems of the mobile device, so that user identification and private shopping information may be illegally obtained, and the user password may be easily stolen.

Furthermore, in the conventional electronic transaction, transaction data is stored in a server, and users are unable to query transaction data in a timely manner.

Therefore, an object of the present invention is to provide a portable electronic device for conducting an electronic transaction with a point-of-sale (POS) terminal that may alleviate the abovementioned drawbacks.

According to one aspect of the present invention, a portable electronic device for conducting an electronic transaction with a point-of-sale (POS) terminal is provided. The portable electronic device comprises:
a device processor;
a memory card module including:
   a communication unit configured for communication between the memory card module and the device processor;
   a transceiver unit configured to receive transaction data from the POS terminal;
   a storage unit that includes a hidden zone, and a working zone storing a read-only control application, the read-only control application including instructions for generation of a transaction interface for a user to conduct the electronic transaction; and
   a processing unit coupled to the transceiver unit for receiving and processing the transaction data therefrom, and configured to store the transaction data thus processed in the hidden zone of the storage unit;
   wherein the processing unit is configured such that the transaction data stored in the hidden zone of the storage unit is accessible only to the processing unit of the memory card module;
   wherein the processing unit is configured to permit the device processor to access the working zone such that the device processor is operable to execute the read-only control application; and
   wherein the processing unit is responsive to control by the device processor that executes the read-only control application for accessing the transaction data stored in the hidden zone of the storage unit; and
a display module controlled by the device processor to display the transaction interface when the read-only control application is executed by the device processor.

According to another aspect of the present invention, a memory card module to be used with a portable electronic device for enabling the portable electronic device to conduct an electronic transaction with a point-of-sale (POS) terminal is provided. The portable electronic device includes a device processor and a display module. The memory card module comprises:
a communication unit configured for communication between the memory card module and the device processor;
a transceiver unit configured to receive transaction data from the POS terminal;
a storage unit that includes a hidden zone, and a working zone storing a read-only control application, the read-only control application including instructions for generation of a transaction interface for a user to conduct the electronic transaction; and
a processing unit coupled to the transceiver unit for receiving and processing the transaction data therefrom, and configured to store the transaction data thus processed in the hidden zone of the storage unit;
wherein the processing unit is configured such that the transaction data stored in the hidden zone of the storage unit is accessible only to the processing unit of the memory card module;
wherein the processing unit is configured to permit the device processor to access the working zone such that the device processor is operable to execute the read-only control application; and
wherein the processing unit is responsive to control by the device processor that executes the read-only control application for accessing the transaction data stored in the hidden zone of the storage unit.

Other features and advantages of the present invention will become apparent in the following detailed description of the preferred embodiment with reference to the accompanying drawings, of which:
Figure 1 is a schematic diagram illustrating an e-wallet service system using a portable electronic device according to the present invention;
Figure 2 is a block diagram illustrating a preferred embodiment of the portable electronic device for conducting an electronic transaction according to the present invention;
Figure 3 is a flow chart illustrating steps of on-line shopping using the preferred embodiment;
Figure 4 is a flow chart illustrating steps of shopping at a physical store equipped with a point-of-sale terminal using the preferred embodiment;
Figure 5 is a flow chart illustrating steps of displaying transaction data using the preferred embodiment;
Figure 6 is a flow chart illustrating steps of recharging using the preferred embodiment;
Figure 7 is a flow chart illustrating steps of gifting using the preferred embodiment;
Figure 8 is a flow chart illustrating steps of shopping with electronic certificate using the preferred embodiment;
Figure 9 is a flow chart illustrating steps of verification of a user inputted password using the preferred embodiment; and
Figure 10 is a schematic diagram showing a virtual keyboard displayed using the preferred embodiment.

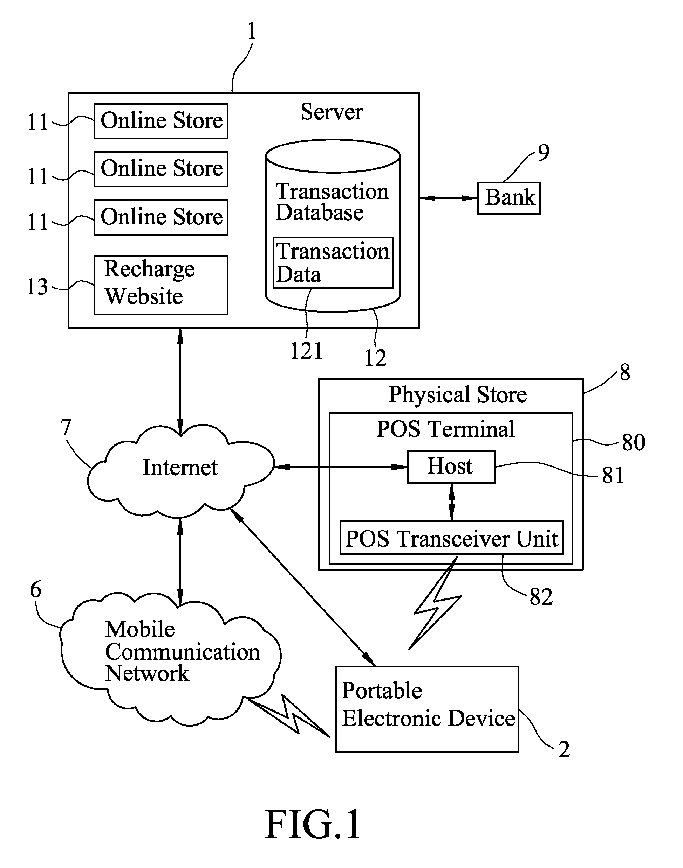

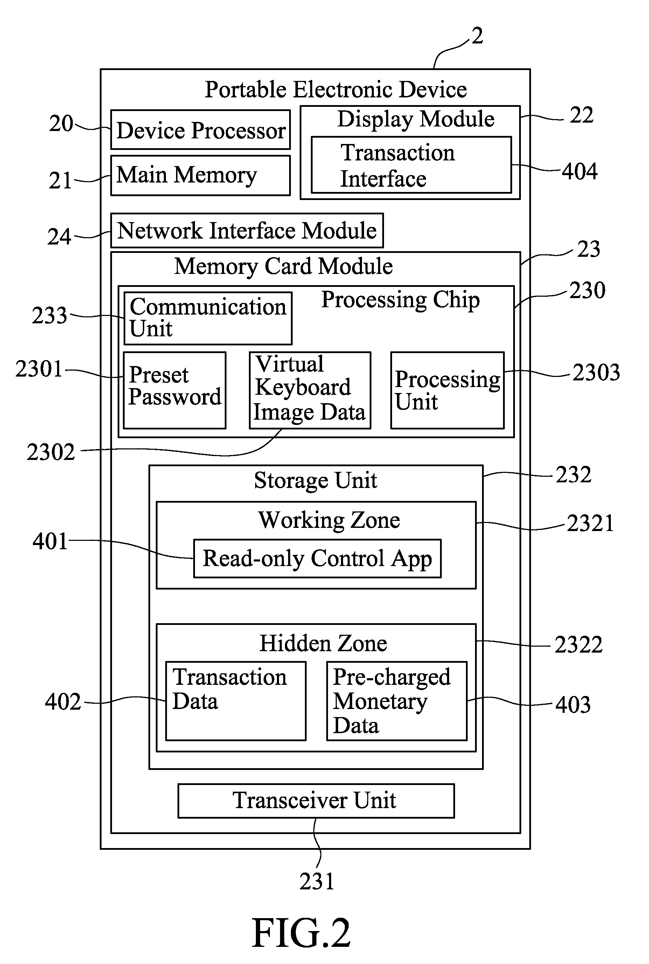

Referring to Figures 1 and 2, the preferred embodiment of the portable electronic device 2 according to this invention is provided for conducting an electronic transaction with a point-of-sale (POS) terminal 80 in a physical store 8, or with an on-line store 11. The POS terminal 80 includes a host 81 and a POS transceiver unit 82.

In the preferred embodiment, server 1 is constructed by a provider of an e-wallet service system, and the on-line stores 11 are set in the server 1. As shown in Figure 1, the server 1 includes a transaction database 12 for storage of special offer information and transaction data 121 of users. The special offer information may be product vouchers, monetary coupons, discount coupons, reward points, electronic receipts, etc. The transaction data 121 may include monetary balance, purchasing certificates, electronic coupons, product traceability, agriculture product traceability, electronic receipts, usage record, etc. The usage record may include monetary amount of transaction, transaction time, transaction product, product amount of transaction, transaction location, etc.

The portable electronic device 2 may be a tablet computer or a mobile phone, and is coupled to the server 1 through a network. When the portable electronic device 2 is a notebook computer or a tablet computer, the network may be the Internet 7. When the portable electronic device 2 is a mobile phone, the network may be a mobile communication network 6. In the latter case, users may couple the portable electronic device 2 having the mobile communication function to the server 1 by accessing the Internet 7 through the mobile communication network 6.

Referring to Figure 2, in this embodiment, the portable electronic device 2 includes a device processor 20, a main memory 21 (e.g., a random access memory), a display module 22 (e.g., a touch panel display), a memory card module 23, and a network interface module 24 for access to a network.

The memory card module 23 includes a processing chip 230, a transceiver unit 231, a storage unit 232, and a communication unit 233 for communication between the memory card module 23 and the device processor 20. The transceiver unit 231 may be configured for either contact-free communication or wired communication with the POS terminal 80.

If the transceiver unit 231 is configured for wired communication with the POS terminal 80, the wired communication technique may be selected from USE (universal serial bus), IEEE 1394, PCIe (peripheral component interconnect express), SATA (serial advanced technology attachment), RS232, etc. As an example, if the transceiver unit 231 employs USE for wired communication, the POS transceiver unit 82 of the POS terminal 80 equipped in the physical store 8 may need a USB connector for conducting the electronic transaction with the portable electronic device 2.

On the other hand, if the transceiver unit 231 is configured for contact-free communication with the POS terminal 80, the contact-free communication technique may be selected from two-dimensional bar code (e.g., QR code), NFC (near field communication), infrared, radio, WLAN (wireless local area network), bluetooth, zigbee, etc. As an example, if the transceiver unit 231 employs QR code technique for contact-free communication, the POS transceiver unit 82 of the POS terminal 80 equipped in the physical store 8 may need a QR code reader. As another example, if the transceiver unit 231 employs NFC technique for contact-free communication, the POS transceiver unit 82 may need an NFC reader for conducting the electronic transaction with the portable electronic device 2.

In this embodiment, the memory card module 23 is preferably implemented as a microSD card having a built-in transceiver unit 231.

The storage unit 232 may be a flash memory that includes a hidden zone 2322, and a working zone 2321 storing a read-only control application 401 and other system applications. The read-only control application 401 includes instructions for generation of a transaction interface 404 of the e-wallet service system for a user to conduct the electronic transaction. The hidden zone 2322 is for storage of the transaction data 402 that is the same as transaction data 121 stored in the transaction database 12 of the server 1.

The processing chip 230 includes a processing unit 2303, a password 2301 preset by the user, and virtual keyboard image data 2302. The processing unit 2303 is coupled to the transceiver unit 231 for receiving and processing the transaction data therefrom, is configured to compare a password inputted by the user with the preset password 2301, to determine whether or not the user is authorized according to the comparison result, and to access the hidden zone 2322 of the storage unit 232 for reading/writing the transaction data 402 from/into the hidden zone 2322.

In this embodiment, the processing unit 2303 is configured such that the transaction data 402 stored in the hidden zone 2322 of the storage unit 232 is accessible only to the processing unit 2303 of the memory card module 23. That is, the hidden zone 2322 is hidden from the device processor 20 by the processing unit 2303. In addition, the processing unit 2303 is configured to permit the device processor 20 to access the working zone 2321 such that the device processor 20 is operable to execute the read-only control application 401. Moreover, the processing unit 2303 is responsive to control by the device processor 20 that executes the read-only control application 401 for accessing the transaction data 402 stored in the hidden zone 2322 of the storage unit 232.

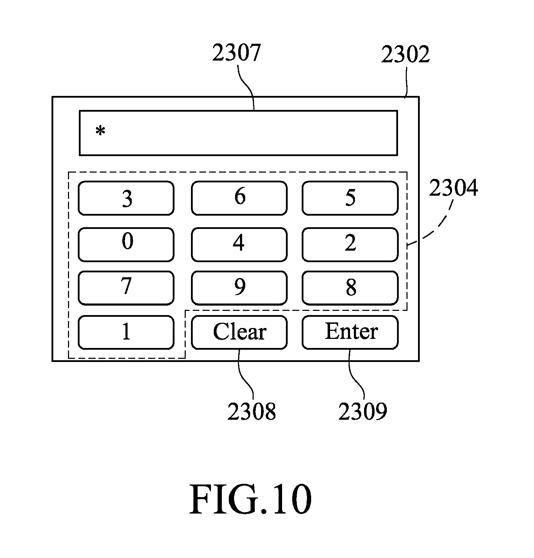

In this embodiment, the preset password 2301 is a hardware-based password built in the processing chip 230 for effectively promoting safety when conducting the electronic transaction between the portable electronic device 2 and the on-line store 11/physical store 8. The virtual keyboard image data 2302 is used for generation of a virtual keyboard (see Figure 10) on the display module 22, so as to enable user input of a password.

In addition, the processing chip 230 may include multiple preset passwords corresponding respectively to multiple users. In other words, the portable electronic device 2 is adapted to be used by multiple users, for example, multiple members of a family, and each of the preset passwords can be reset by the user. Therefore, by virtue of the multiple preset passwords, different transaction limitations and protection mechanisms may be provided for different users. The transaction limitations may include monetary limitation for a single payment, total monetary limitation, store limitation, product limitation, requirement of legal guardian agreement for conducting transaction, time limitation, etc. The protection mechanisms may include e-wallet invalidation, automatic notification to the police, automatic notification to the police after payment, delayed payment, e-wallet invalidation after payment, transaction tracking by legal guardian mechanism, etc. By use of the transaction tracking by legal guardian mechanism, transaction data of minors may be transmitted to a website specified by his/her legal guardian, or to a portable electronic device 2 specified by the legal guardian.

Furthermore, the processing unit 2303 may be configured with encryption/decryption function to decrypt encrypted transaction data received from the transceiver unit 231 before storing the received transaction data into the hidden zone 2322 of the storage unit 232, and to encrypt the transaction data 402 read from the hidden zone 2322 of the storage unit 232.

When a user proceeds with payment using the portable electronic device 2, the processing unit 2303 of the memory card module 23 processes the transaction data 121, stores the transaction data 121 thus processed in the hidden zone 2322 of the storage unit 232, and transmits via the communication unit 233 the transaction data processed thereby to the device processor 20 that executes the read-only control application 401. Thereafter, the device processor 20 transmits the transaction data received from the communication unit 233 to the server 1 via the network interface module 24 for storage of the transaction data thus transmitted in the server 1.

In addition, the processing unit 2303 of the memory card module 23 may be further configured to transmit via the communication unit 233 the transaction data read from the hidden zone 2322 to the device processor 20 that executes the read-only control application 401. Then, the device processor 20 transmits the transaction data received from the communication unit 233 to a website specified by another portable electronic device 2 (not shown), or to said another portable electronic device 2 via the network interface module 24.

Furthermore, different monetary discounts may be provided to different portable electronic devices 2 due to different authorization settings.

The network interface module 24 enables the portable electronic device 2 to visit the online stores 11 or a recharge website 13 (see Figure 1) of the server 1, or to transmit the transaction data 121 to the server 1 for storage in the transaction database 12, through the Internet 7 or the mobile communication network 6. In addition, the processing unit 2303 may encrypt and transmit the transaction data to the device processor 20 via the communication module 233, and then the device processor 20 controls the network interface module 24 to transmit the encrypted transaction data to the server 1 through the Internet 7 or the mobile communication network 6 for subsequent decryption and storage in the transaction database 12.

The operational process flows of the portable electronic device 2 of the preferred embodiment will be described hereinafter.

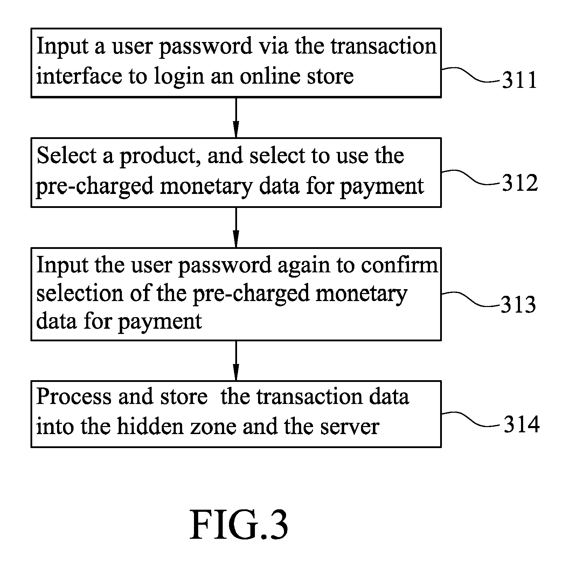

Referring to Figure 3, steps of shopping at an online store 11 are described in steps 311 to 314. In step 311, when an online store 11 visited by the user requires the user to login, it automatically triggers the device processor 20 to execute the read-only control application 401, and to cause the display module 22 to display the transaction interface 404. The user is required to input a user password corresponding to the preset password 2301 via the transaction interface 404 to login the online store 11.

In step 312, when the user has completed product selection and has decided to proceed with payment, the user may select to use pre-charged monetary data 403 (see Figure 2) that is stored in the hidden zone 2322 of the storage unit 232 for payment via the transaction interface 404.

In step 313, the device processor 20 that executes the read-only control application 401 requires input of a user password again through the transaction interface 404 for confirming selection of the pre-charged monetary data 403 for payment.

In step 314, the processing unit 2303 processes the transaction data 402 and the pre-charged monetary information 403 for payment of the selected product, stores the processed transaction data in the hidden zone 2322 of the storage unit 232, and transmits via the communication unit 233 the processed transaction data to the device processor 20 that executes the read-only control application 401 for subsequent transmission via the network interface module 24 to the server 1 for storage in the transaction database 12.

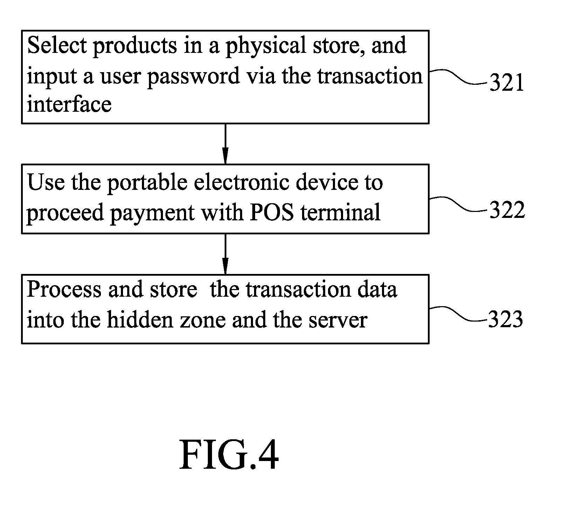

Referring to Figure 4, steps of shopping in a physical store 8 equipped with the POS terminal 80 are described in steps 321 to 323. In step 321, when the user proceeds with payment for selected products, the device processor 20 may be triggered to execute the read-only control application 401, and the display module 22 is controlled by the device processor 20 that executes the read-only control application 401 to display the transaction interface 404 for input of a user password.

In step 322, after the processing unit 2303 confirms that the inputted user password corresponds to the preset password 2301, the user may proceed with contact-free transaction by bringing the portable electronic device 2 to be proximate to the sensing-type POS transceiver unit 82 such that the transceiver unit 231 is coupled to the sensing type POS transceiver unit 82, or may proceed with wired transaction through physical connection between the portable electronic device 2 and a wired-type POS transceiver unit 82.

In step 323, the processing unit 2303 processes the transaction data 121 for payment of the selected products, stores the processed transaction data in the hidden zone 2322 of the storage unit 232, and transmits via the communication unit 233 the processed transaction data to the device processor 20 that executes the read-only control application 401 for subsequent transmission via the network interface module 24 the server 1 for storage in the transaction database 12.

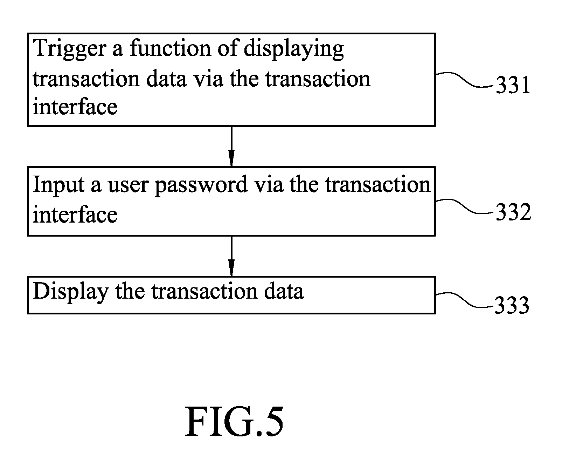

Referring to Figure 5, steps of displaying transaction data are described in steps 331 to 333. In step 331, the user may trigger a function of displaying transaction data through the transaction interface 404.

In step 332, the device processor 20 that executes the read-only control application 401 requires input of a user password through the transaction interface 404.

In step 333, after the processing unit 2303 confirms that the inputted user password corresponds to the preset password 2301, the processing unit 2303 reads the transaction data 402 stored in the hidden zone 2322, and transmits via the communication unit 233 the transaction data read thereby to the device processor 20 that executes the read-only control application 401 for subsequent display of the transaction data (e.g., transaction history, pre-charged monetary amount, etc.) received from the communication unit 233 via the transaction interface 404 displayed by the display module 22. In addition, the processing unit 2303 may be configured to encrypt the transaction data 402 read from the hidden zone 2322, and the device processor 20 that executes the read-only control application 401 decrypts the encrypted transaction data received from the communication unit 233 for subsequent display of the transaction data thus decrypted by the display module 22.

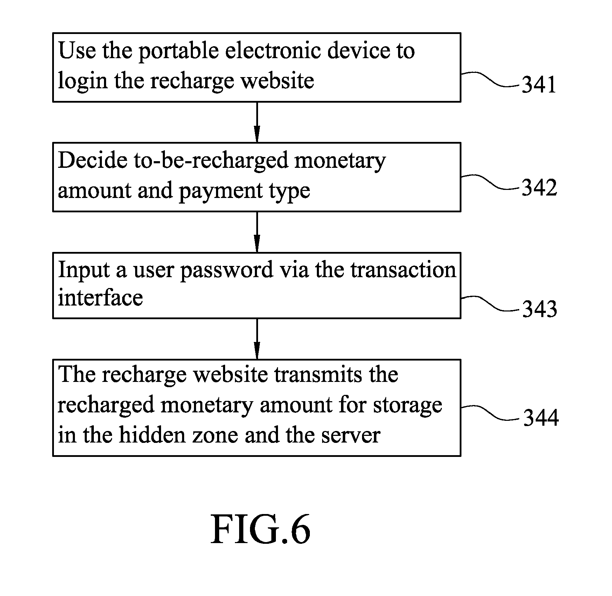

Referring to Figure 6, steps of e-wallet recharging are described in steps 341 to 344.

In step 341, the user may use the portable electronic device 2 to login a recharge website 13 that is set in the server 1.

In step 342, the user may decide a to-be-recharged monetary amount and a payment type through the recharge website 13. The payment type may be selected to be credit card payment or ATM payment. Therefore, during the payment process, the server 1 may need to be connected to a bank 9 (see Figure 1) for monetary deduction from a bank account balance.

In step 343, the device processor 20 that executes the read-only control application 401 requires input of a user password through the transaction interface 404.

In step 344, after the processing unit 2303 confirms that the inputted user password corresponds to the preset password 2301, the recharge operation is allowed, and the network interface module 24 receives the recharged monetary amount from the recharge website 13. Then, the device processor 20 transmits via the communication unit 233 the recharged monetary amount received by the network interface module 24 to the processing unit 2303. The processing unit 2303 stores the recharged monetary amount received thereby in the hidden zone 2322 of the storage unit 232. In addition, the server 1 receives the recharged monetary amount from the recharge website 13 for storage in the transaction database 12.

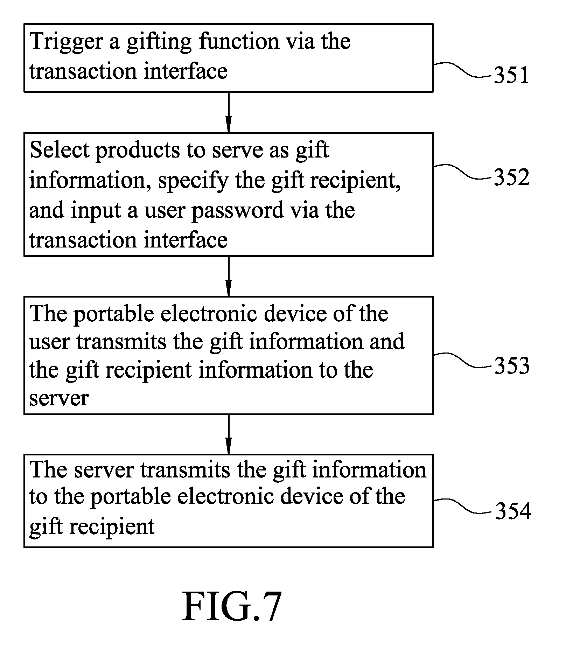

Referring to Figure 7, steps of gifting are described in steps 351 to 354. In step 351, the user may manually trigger the device processor 20 to execute the read-only control application 401 to display the transaction interface 404 on the display module 22, and select a gifting function via the transaction interface 404.

In step 352, the user may select product information (e.g., an electronic product voucher) from the transaction data stored in the hidden zone 2322 to serve as gift information, and specifies a gift recipient via the transaction interface 404. Then, the device processor 20 that executes the read-only control application 401 requires input of a user password through the transaction interface 404.

In step 353, after the processing unit 2303 confirms that the inputted user password corresponds to the preset password 2301, the processing unit 2303 transmits via the communication unit 233 the gift information and the gift recipient information to the device processor 20 that executes the read-only control application 401. Then, the device processor 20 transmits the gift information and the gift recipient information to the server 1 via the network interface module 24.

In step 354, the server 1 transmits the gift information to the network interface module 24 of a portable electronic device 2 of the gift recipient (another user) using the gift recipient information. In the portable electronic device 2 of the gift recipient, the device processor 20 transmits via the communication unit 233 the gift information to the processing unit 2303, and the processing unit 2303 edits the transaction data 402 stored in the hidden zone 2322 according to the gift information.

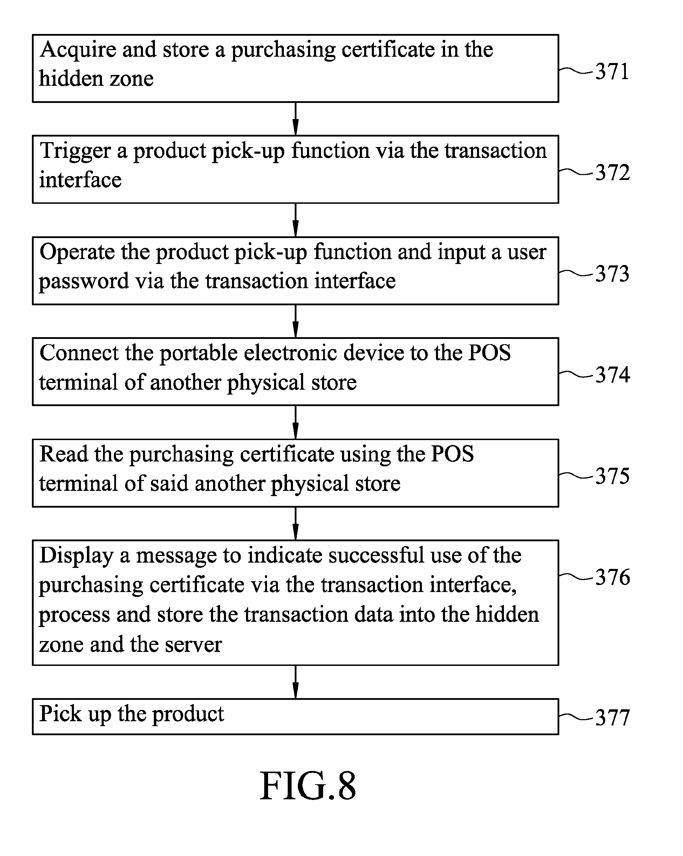

Referring to Figure 8, steps of a purchasing certificate acquisition and product pick-up/ticket use process are described in steps 371 to 377. In step 371, the user may use the portable electronic device 2 for payment at a physical store 8 equipped with the POS terminal 80 or an online store 11 for acquiring a purchasing certificate to be stored in the hidden zone 2322 of the memory card module 23.

In step 372, the user may trigger the device processor 20 to execute the read-only control application 401 to display the transaction interface 404 on the display module 22, and select a product pick-up/ticket use function through the transaction interface 404.

In step 373, after the user has selected a product or ticket for association with a purchasing certificate stored in the hidden zone 2322, the device processor 20 that executes the read-only control application 401 requires input of a user password through the transaction interface 404.

In step 374, the user may proceed with contact-free or wired connection between the portable electronic device 2 and the POS terminal of another physical store (not shown) or ticket-receiving point (not shown).

In step 375, the user may use the POS terminal of said another physical store or ticket receiving point to read the purchasing certificate stored in the hidden zone 2322 of the memory card module 23 through the transceiver unit 231.

In step 376, the device processor 20 that executes the read-only control application 401 causes the display module 22 to display a message using the transaction interface 404 to indicate that use of the purchasing certificate has been successful. The processing unit 2303 then processes and stores the transaction data 402 in the hidden zone 2322 of the memory card module 23 accordingly, and transmits via the communication unit 233 the transaction data thus processed to the device processor 20 for subsequent transmission to the server 1 through the network interface module 24 for storage in the transaction database 12.

In step 377, the user may pick up the physical product from said another physical store, or use the ticket (e.g., train ticket, concert ticket, etc.) at the ticket receiving point.

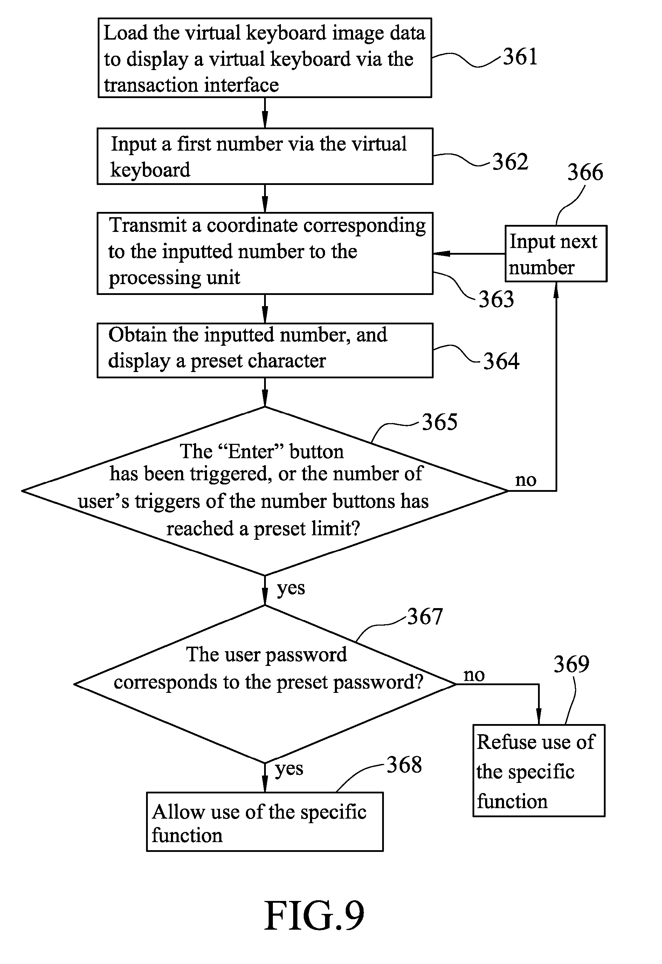

Referring to Figure 9, steps of verification of the inputted user password are described in steps 361 to 367. In step 361, when the user triggers a specific function of the e-wallet (e.g., online shopping, shopping with a POS terminal, transaction data display, recharge, gifting, product pick-up, ticket use, etc., as shown in Figures 3 to 8), the device processor 20 executes the read-only control application 401 for loading the virtual keyboard image data 2302 from the processing chip 230, so as to display a virtual keyboard (as shown in Figure 10) using the transaction interface 404. In this embodiment, the virtual keyboard image data 2302 includes data of ten number buttons that are to be displayed within a number button zone 2304, and data of control buttons (e.g., "Clear" button 2308, "Enter" button 2309). Every time the device processor 20 displays the virtual keyboard using the transaction interface 404, position arrangement of the number buttons and the control buttons may be changed.

In step 362, the user may use a point input device (not shown, such as a mouse, a touch stylus, etc.) to input a first number of a user password by selecting one of the number buttons.

In step 363, the device processor 20 that executes the read-only control application 401 generates and encrypts a coordinate corresponding to the number thus inputted, and transmits the coordinate thus encrypted to the processing unit 2303 via the communication unit 233.

In step 364, the processing unit 2303 decrypts the encrypted coordinate, calculates the inputted number according to the coordinate thus decrypted, and the device processor 20 that executes the read-only control application 401 causes the display module 22 to display a preset character irrelevant to the inputted number. Referring to Figure 10 as an example, the virtual keyboard includes a preset character display zone 2307 that is disposed above the number button zone 2304 and that is displaying a star sign "*" in response to the first number input by the user.

In step 365, the processing unit 2303 confirms whether or not the "enter" button 2309 has been triggered, or whether or not the number of user's triggers of the number buttons has reached a preset limit. If the processing unit 2303 confirms that the "Enter" button 2309 is not triggered, and the number of user's triggers of the number buttons has not yet reached the preset limit, which means that the user has not yet completed the password input procedure, the processing unit 2303 permits the next number input in step 366, and then steps 363 to 365 are repeated.

If the processing unit 2303 confirms in step 365 that the "Enter" button 2309 has been triggered, or the number of user's triggers of the number buttons has reached the preset limit, which means that the user has completed the password input procedure, the processing unit 2303 performs step 367 to compare the user password with the preset password 2301 that corresponds to the user.

When the processing unit 2303 determines that the user password corresponds to the preset password, which means the user is an authorized user of the portable electronic device 2, the processing unit 2303 performs step 368 to allow the user to use the specific function of the read-only control application 401. On the other hand, when the processing unit 2303 determines that the user password does not correspond to the preset password, which means the user is not an authorized user of the portable electronic device 2, the processing unit 2303 performs step 369 to refuse use of the specific function of the read-only control application 401 by the user.

To sum up, the portable electronic device 2 of the present invention stores the transaction data in the hidden zone 2322 of the storage unit 232 (e.g., a flash memory) of the memory card module 23 (e.g., a microSD card module), thereby preventing data from being attacked or preventing private data from being obtained illegally. In addition, since the memory card module 23 includes the transceiver unit 231 that is configured for proceeding with wired and/or contact-free communication with the POS terminal 80, the user may use the portable electronic device 2 of this invention to proceed with wired and/or contact-free payment in a physical store 8(e.g., a convenience store). Furthermore, by virtue of the preset password 2301, the virtual keyboard image data 2302, and the password comparison function of the processing unit 2303 of the processing chip 230, safety of electronic transactions may be promoted by use of the portable electronic device 2 of this invention.

## Claims

1. A memory card module (23) to be used with a portable electronic device (2) for enabling the portable electronic device (2) to conduct an electronic transaction with a point-of-sale (POS) terminal (80), the portable electronic device (2) including a device processor (20) and a display module (22), said memory card module (23) **characterized by**:
a communication unit (233) configured for communication between said memory card module (23) and the device processor (20);
a transceiver unit (231) configured to receive transaction data from the POS terminal (80);
a storage unit (232) that includes a hidden zone (2322), and a working zone (2321) storing a read-only control application (401), said read-only control application (401) including instructions for generation of a transaction interface (404) for a user to conduct the electronic transaction; and
a processing unit (2303) coupled to said transceiver unit (231) for receiving and processing the transaction data therefrom, and configured to store the transaction data thus processed in said hidden zone (2322) of said storage unit (232);
wherein said processing unit (2303) is configured such that the transaction data (402) stored in said hidden zone (2322) of said storage unit (232) is accessible only to said processing unit (2303) of said memory card module (23);
wherein said processing unit (2303) is configured to permit the device processor (20) to access said working zone (2321) such that the device processor (20) is operable to execute said read-only control application (401); and
wherein said processing unit (2303) is responsive to control by the device processor (20) that executes said read-only control application (401) for accessing the transaction data (402) stored in said hidden zone (2322) of said storage unit (232).

2. The memory card module (23) according to Claim 1, **characterized in that** the transaction data received from the POS terminal (80) is encrypted transaction data, said processing unit (2303) being further configured to decrypt the encrypted transaction data and to store the transaction data thus decrypted in said hidden zone (2322) of said storage unit (232).

3. The memory card module (23) according to Claim 2, **characterized in that** said processing unit (2303) is further configured to read and encrypt the transaction data stored in said hidden zone (2322) of said storage unit (232), and to transmit the transaction data thus encrypted to said transceiver unit (231) for subsequent transmission to the POS terminal (80).

4. The memory card module (23) according to Claim 2, **characterized in that** said processing unit (2303) is further configured to transmit the encrypted transaction data via said communication unit (233) to the device processor (20) that executes said read-only control application (401);
said read-only control application (401) further including instructions which, when executed by the device processor (20), causes the device processor (20) to decrypt the encrypted transaction data received from said communication unit (233), and to cause the display module (22) to display the transaction data thus decrypted.

5. The memory card module (232) according to Claim 1, further **characterized by** a preset password (2301),
the device processor (20) that executes said read-only control application (401) generating and encrypting a coordinate set corresponding to input of a user password, and transmitting the coordinate set thus encrypted to said processing unit (2303) via said communication unit (233);
wherein said processing unit (2303) is further configured to decrypt the encrypted coordinate set for obtaining the user password, compare the user password with the preset password (2301), and store the transaction data processed thereby in said hidden zone (2322) of said storage unit (232) upon determining that the user password corresponds to the preset password (2301).

6. The memory card module (23) according to Claim 5, **characterized in that** said processing unit (2303) is further configured to, in response to a requirement of displaying transaction data, enable the device processor (20) to cause the display module (22) to display the transaction data processed by said processing unit (2303) when said processing unit (2303) determines that the user password inputted for the requirement of displaying transaction data corresponds to the preset password (2301).

7. A portable electronic device (2) for conducting an electronic transaction with a point-of-sale (POS) terminal (80), said portable electronic device (2) **characterized by**:
a device processor (20);
a memory card module (23) including:
a communication unit (233) configured for communication between said memory card module (23) and said device processor (20);
a transceiver unit (231) configured to receive transaction data from the POS terminal (80);
a storage unit (232) that includes a hidden zone (2322), and a working zone (2321) storing a read-only control application (401), said read-only control application (401) including instructions for generation of a transaction interface (404) for a user to conduct the electronic transaction; and
a processing unit (2303) coupled to said transceiver unit (231) for receiving and processing the transaction data therefrom, and configured to store the transaction data thus processed in said hidden zone (2322) of said storage unit (232);
wherein said processing unit (2303) is configured such that the transaction data (402) stored in said hidden zone (2322) of said storage unit (232) is accessible only to said processing unit (2303) of said memory card module (23);
wherein said processing unit (2303) is configured to permit said device processor (20) to access said working zone (2321) such that said device processor (20) is operable to execute said read-only control application (401); and
wherein said processing unit (2303) is responsive to control by said device processor (20) that executes said read-only control application (401) for accessing the transaction data (402) stored in said hidden zone (2322) of said storage unit (232); and
a display module (22) controlled by said device processor (20) to display the transaction interface (404) when said read-only control application (401) is executed by said device processor (20).

8. The portable electronic device (2) according to Claim 7, **characterized in that** said transceiver unit (231) is configured for contact-free communication with the POS terminal (80).

9. The portable electronic device (2) according to Claim 7, **characterized in that** the transaction data received from the POS terminal (80) is encrypted transaction data, said processing unit (2303) being further configured to decrypt the encrypted transaction data and to store the transaction data thus decrypted in said hidden zone (2322) of said storage unit (2303).

10. The portable electronic device (2) according to Claim 9, **characterized in that** said processing unit (2303) is further configured to read and encrypt the transaction data (402) stored in said hidden zone (2322) of said storage unit (232), and to transmit the transaction data thus encrypted to said transceiver unit (231) for subsequent transmission to the POS terminal (80).

11. The portable electronic device (2) according to Claim 9, **characterized in that** said processing unit (2303) is further configured to transmit the encrypted transaction data via said communication unit (233) to said device processor (20) that executes said read-only control application (401);
said read-only control application (401) further including instructions which, when executed by said device processor (20), causes said device processor (20) to decrypt the encrypted transaction data received from said communication unit (233), and to cause said display module (22) to display the transaction data thus decrypted.

12. The portable electronic device (2) according to Claim 7, **characterized in that** said memory card module (23) further includes a preset password (2301) and a virtual keyboard image data (2302) built therein, wherein said device processor (20) that executes said read-only control application (401) is configured to
cause said display module (22) to display a virtual keyboard by loading said virtual keyboard image data (2302) for input of a user password through the virtual keyboard,
generate and encrypt a coordinate set corresponding to the user password thus inputted, and
transmit the coordinate set thus encrypted to said processing unit (2303) via said communication unit (233) ;
wherein said processing unit (2303) is further configured to decrypt the encrypted coordinate set for obtaining the user password, to compare the user password with the preset password (2301), and to store the transaction data processed thereby in said hidden zone (2322) of said storage unit (232) upon determining that the user password corresponds to the preset password (2301).

13. The portable electronic device (2) according to Claim 12, **characterized in that** said device processor (20) that executes said read-only control application (401) is further configured, in response to a requirement of displaying transaction data, to cause said display module (22) to display the virtual keyboard for input of a user password through the virtual keyboard; and
wherein said processing unit (2303) is further configured to enable said device processor (20) to cause said display module (22) to display the transaction data processed by said processing unit (2303) when said processing unit (2303) determines that the user password inputted for the requirement of displaying transaction data corresponds to the preset password (2301).

14. The portable electronic device (2) according to Claim 7, further **characterized by** a network interface module (24) for access to a network, said processing unit (2303) being further configured to transmit via said communication unit (233) the transaction data processed thereby to said device processor (20) that executes said read-only control application (401), said device processor (20) being further configured to transmit the transaction data received from said communication unit (233) to a server (1) via said network interface module (24) for storage of the transaction data thus transmitted in the server (1).

15. The portable electronic device (2) according to Claim 14, **characterized in that** said processing unit (2303) is further configured to encrypt the transaction data processed thereby and to transmit via said communication unit (233) the transaction data thus encrypted to said device processor (20) that executes said read-only control application (401);
said device processor (20) being further configured to transmit the transaction data encrypted by said processing unit (2303) to the server (1) via said network interface module (24) for storage in the server (1).
